# EUROPEAN PATENT SPECIFICATION

(11) **EP 1 746 797 B1**
(45) Date of publication and mention of the grant of the patent: **19.09.2007**
(21) Application number: 05254477.2
(22) Date of filing: 18.07.2005
(51) Int. Cl.: H04L 29/06, H04L 12/28

(54) **Scheme for resolving authentication in a wireless packet data network after a key update**
Schema zur Lösung von Authentifiziering in einem Funkpaketdatennetz nach Schlüsselaktualisierung
Schéma pour la résolution d'authentification dans un réseau sans fil de données par paquets après mise à jour de la clé

(43) Date of publication of application: 24.01.2007
(73) Proprietor: Research In Motion Limited, Waterloo, Ontario N2L 3W8 (CA)
(72) Inventor: Islam, Muhammad Khaledul, Ottawa, Ontario K2K 3N4 (CA); Kim, Jin, Ottawa, Ontario K1Y 4S3 (CA); Chaudry, Shahid Rasul, Ottawa K2W 1E4 (CA)
(74) Representative: Hibbert, Juliet Jane Grace

(56) References cited:
- "TIA/IS-835-B, CDMA2000 WIRELESS IP NETWORK STANDARD" TIA/EIA INTERIM STANDARD, September 2002 (2002-09), pages 1-111, XP002288685
- CARROLL C ET AL: "Verizon Wireless Dynamic Mobile IP Key Update for cdma2000(R) Networks" IETF STANDARD-WORKING-DRAFT, INTERNET ENGINEERING TASK FORCE, IETF, CH, no. 5, March 2005 (2005-03), XP015037676 ISSN: 0000-0004
- K. SANKAR, A. BALINSKY, D. MILLER, S. SUNDARALINGAM: "EAP Authentication Protocols for WLANs" CISCO PRESS, [Online] 18 February 2005 (2005-02-18), XP002349135 Retrieved from the Internet: URL:http://www.ciscopress.com/articles/art icle.asp?p=369223&rl=1>
- BLUNK L: "PPP Extensible Authentication Protocol (EAP) RFC 2284" IETF STANDARD, INTERNET ENGINEERING TASK FORCE, IETF, CH, 1 March 1998 (1998-03-01), XP015008068 ISSN: 0000-0003

## Description

### FIELD OF THE DISCLOSURE

The present patent disclosure generally relates to wireless packet data networks. More particularly, and not by way of any limitation, the present patent disclosure is directed to a scheme for resolving authentication of a mobile node in a wireless packet data network after a key update mechanism that updates authentication keys.

### BACKGROUND

When an Internet Protocol (IP)-capable mobile node is operably disposed in a wireless packet data network, it is typically required to authenticate itself with the network infrastructure before obtaining packet data service. The authentication process may be effectuated using a number of protocols, each having appropriate set or sets of authentication keys, passwords, etc., that depend *inter alia* on the mode of IP service that the mobile node is configured to activate. Further, the mobile node may change its mode of service by design or default after initialization, in addition to effectuating a key update process that updates authentication keys. However, this situation can give rise to the possibility of an authentication/registration failure of the mobile node in the network.

The document "TIA/IS-835-B, CDMA2000 WIRELESS IP NETWORK STANDARD" TIA/EIA INTERIM STANDARD, September 2002, pages 1-111 is a standard that defines requirements for support of wireless packet data networking capability in a 3G wireless system based on CDMA2000.

The document BLUNK L: "PPP Extensible Authentication Protocol (EAP) RFC 2284" IETF STANDARD, INTERNET ENGINEERING TASK FORCE, IETF, CH, 1 March 1998, ISSN: 0000-0003, describes a standard method for transporting multi-protocol datagrams over point-to-point links using the Point-to-Point Protocol (PPP).

### SUMMARY

The present invention is set out in the independent claims. Some optional features are set out in the claims dependent thereto.

The present patent disclosure is broadly directed to a scheme for resolving authentication of a mobile node that negotiates with a packet data serving node (PDSN) for establishing a Simple IP (SIP) connection after encountering a failure in Mobile IP (MIP) service mode.

In one aspect, a method is disclosed for resolving authentication of a mobile node disposed in a wireless packet data network, the method comprising at least one or more of the following operations: upon being rendered in a SIP service mode, attempting by the mobile node to negotiate a SIP connection with a PDSN of the wireless packet data network; responsive to a first authentication protocol proposed by the PDSN, counter-proposing by the mobile node of a second authentication protocol for use; and upon acknowledging the second authentication protocol by the PDSN, effectuating an authentication procedure in accordance with the second authentication protocol, wherein the authentication procedure uses a set of authentication keys, a first one provided with the mobile node and a second one provided with the PDSN, that have been updated in a key update process.

In another aspect, a system is disclosed for resolving authentication of a mobile node disposed in a wireless packet data network, the system comprising at least one or more of the following elements: means associated with the mobile node for negotiating a SIP connection with a PDSN of the wireless packet data network, the means operating responsive to the mobile node being rendered in a SIP service mode; means associated with the mobile node for counter-proposing a second authentication protocol for use after rejecting a first authentication protocol proposed by the PDSN; and means, operable upon acknowledging the second authentication protocol by the PDSN, for effectuating an authentication procedure in accordance with the second authentication protocol, wherein the authentication procedure uses a set of authentication keys, a first one provided with the mobile node and a second one provided with the PDSN, that have been updated in a key update process.

In a further aspect, also disclosed is a mobile node operable in a wireless packet data network, the mobile node comprising at least one or more of the following elements: a logic structure for negotiating a SIP connection with a PDSN of the wireless packet data network, the logic operating responsive to the mobile node being rendered in a SIP service mode; a logic structure for counter-proposing a second authentication protocol for use after rejecting a first authentication protocol proposed by the PDSN; and a logic structure for effectuating an authentication procedure in accordance with the second authentication protocol once the second authentication protocol is acknowledged by the PDSN, wherein the authentication procedure uses a set of authentication keys, a first one provided with the mobile node and a second one provided with the PDSN, that have been updated in a key update process.

In yet another aspect, the present disclosure is directed to a PDSN operable in a wireless packet data network, the PDSN comprising at least one or more of the following elements: means for determining that a mobile node has updated a set of authentication keys provided in accordance with a particular authentication protocol for authenticating the mobile node, the set of authentication keys including a first one provided with the mobile node and a second one provided with the PDSN; and means for effectuating a particular authentication procedure, for which the authentication keys have been updated in a key update process, when the mobile node attempts to negotiate a SIP connection with the PDSN upon being rendered in a SIP service mode.

### BRIEF DESCRIPTION OF THE DRAWINGS

A more complete understanding of the embodiments of the present patent disclosure may be had by reference to the following Detailed Description when taken in conjunction with the accompanying drawings wherein:

FIG. 1 depicts a generalized wireless packet data network (WPDN) environment wherein an embodiment of the present patent disclosure may be practiced;

FIG. 2 depicts a flowchart of a key update process in the WPDN embodiment depicted in FIG. 1;

FIG. 3 depicts a flowchart of an exemplary unsuccessful authentication procedure after a key update process;

FIG. 4 depicts a flowchart of a method for resolving authentication of a mobile node while establishing a Simple IP (SIP) connection in accordance with an embodiment of the present patent disclosure;

FIG. 5A depicts a message flow diagram for effectuating an embodiment of authentication resolution procedure depicted in FIG. 4;

FIG. 5B depicts a flowchart of an exemplary Challenge Handshake Authentication Protocol (CHAP) procedure for use in an embodiment of the present patent disclosure;

FIG. 6 depicts a message flow diagram for effectuating another embodiment of a method for resolving authentication of a mobile node while establishing a SIP connection in accordance with the teachings of the present patent disclosure; and

FIG. 7 depicts a block diagram of an embodiment of a communications device operable as a mobile node for purposes of the present patent disclosure.

### DETAILED DESCRIPTION OF THE DRAWINGS

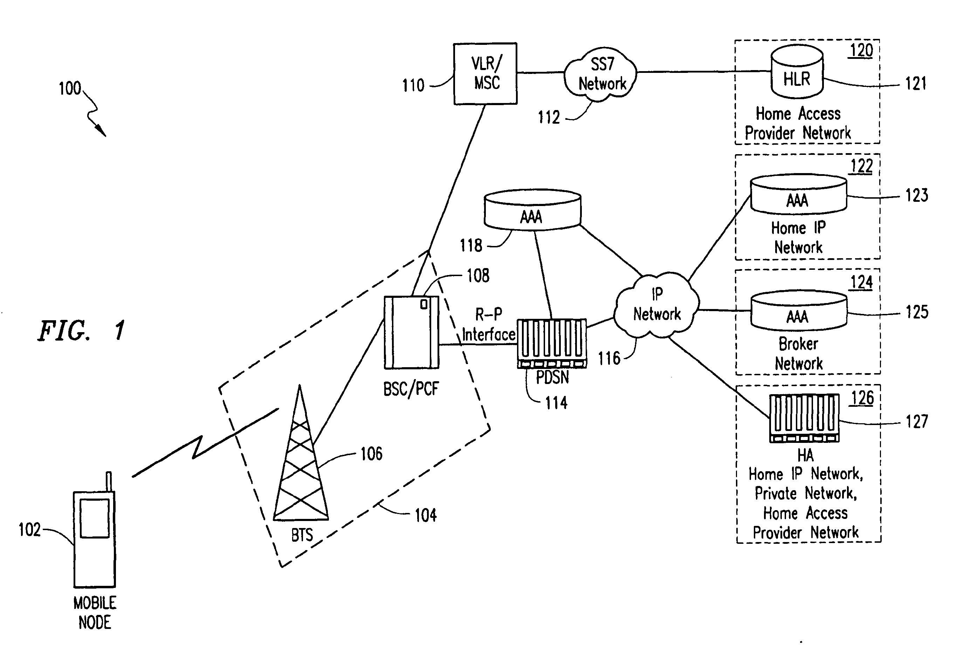

A system and method of the present patent disclosure will now be described with reference to various examples of how the embodiments can best be made and used. Like reference numerals are used throughout the description and several views of the drawings to indicate like or corresponding parts, wherein the various elements are not necessarily drawn to scale. Referring now to the drawings, and more particularly to FIG. 1, depicted therein is a generalized wireless packet data network (WPDN) environment 100 wherein an embodiment of the present patent disclosure may be practiced for resolving authentication of a mobile node 102. By way of example, the WPDN environment 100 is implemented as a data-capable Code Division Multiple Access (CDMA) network (e.g., CDMA 2000), although it is envisaged that the teachings hereof may be applied in any 3^{rd} Generation Partnership Project (3GPP)-compliant cellular network (e.g., 3GPP or 3GPP2) with appropriate modifications and extensions. Mobile node 102 may comprise any untethered user equipment operable to obtain IP-based packet data service within the WPDN environment 100, and may include any personal computer (e.g., desktops, laptops, palmtops, or handheld computing devices) equipped with a suitable wireless modem or a mobile communications device (e.g., cellular phones or data-enabled handheld devices capable of receiving and sending messages, web browsing, et cetera), or any enhanced PDA device or integrated information appliance capable of email, video mail, Internet access, corporate data access, messaging, calendaring and scheduling, information management, and the like.

A Radio Access Network (RAN) 104 comprising a Base Transceiver Station 106 and an integrated Radio/Packet (RP) functionality 108 forms a network portion that provides access to both circuit-switched cellular telephony network portions as well as packet-switched network portions of the WPDN environment 100. By way of illustration, a Visitor Location Register (VLR) and associated Mobile Switching Center (MSC) 110, a Signaling System No. 7 (SS7) network 112, and a Home Access Provider network 120 that includes a Home Location Register (HLR) 121 exemplify the cellular telephony network portion that may be accessed using the Base Station Controller (BSC) functionality of the integrated RP module 108. A Packet Control Function (PCF) of the RP module 108 is operable to effectuate connectivity between the mobile node 102 and the packet data network portions via an R-P interface to a network node called a Packet Data Serving Node (PDSN) 114. In general, PDSN 114 is coupled via an IP network 116 to a number of Authentication, Authorization and Accounting (AAA) servers for managing packet data services on behalf of the mobile node 102, including providing access to external IP networks such as, e.g., the Internet. As illustrated, a Home IP network 122 includes a Remote Authentication Dial In User Service (RADIUS)-based AAA server 123 for providing AAA services as an Access Registrar (AR) for the user/subscriber associated with mobile node 102. The Home IP network 122 may comprise a private corporate network, publicly accessible network, or an International Mobile Telecommunications (IMT)-2000 network. A Visited RADIUS/AAA server 118 is operable as an AR when the mobile node 102 is roaming. A Home Agent 127 disposed in another network portion 126 is coupled via the IP network 116 to PDSN 114 for providing, *inter alia,* data mobility bindings as will be described below. A Broker RADIUS network 124 includes one or more Broker RADIUS servers 125 that maintain security relationships with the Visited RADIUS server 118 as well as the Home RADIUS server 123 for transferring RADIUS messages between a Visited Access Provider network portion and the Home IP network 122.

When the user first makes a data call using the mobile node 102, it establishes a Point-to-Point Protocol (PPP) session with PDSN 114, which may authenticate the mobile node 102 by communicating with an appropriate AAA server. For example, PDSN 114 may first communicate with the Visited AAA server 118 which in turn may communicate with the Home AAA server 123, possibly through some Broker RADIUS servers (e.g., Broker RADIUS server 125). The Home AAA server 123 verifies that the user is a valid subscriber, determines what services are available for the user, and tracks usage for billing. After the mobile node 102 is authenticated, it may use the IP Control Protocol (IPCP) to request an IP address for commencing a packet data session.

In general operation, a packet data session describes an instance of continuous use of packet data service by the user of appropriate wireless IP equipment (e.g., mobile node 102). Typically, a packet data session begins when the user invokes packet data service, and it ends when the user or the network terminates the service. During a particular packet data session, the user may change locations but the same IP address is maintained. Two types of IP data services are possible: Simple IP (SIP) service and Mobile IP (MIP) service. For SIP service, the mobile node is assigned an IP address by the serving PDSN. Accordingly, moving from the coverage area of one PDSN to another PDSN constitutes a change in the packet data session for SIP service. In other words, in SIP service, a packet data session and a PPP session are concurrent. For MIP service, the Home Agent assigns the IP address for the mobile node during the MIP registration process. A packet data session can span several PDSNs as long as the user continuously maintains mobility bindings at the Home Agent and there is no lapse in MIP registrations and/or re-registrations (i.e., the IP address is persistent). The mobile node registers with its Home Agent when it is determined that it is no longer in its Home IP network, and communicates with the Home Agent through the serving PDSN that acts as a Foreign Agent (FA). When not in its Home IP network, the mobile node will be associated with a care-of address (CoA), typically the address of the FA/PDSN. Thus, for a MIP service, the packet data session can exist through several changes of the PPP session.

A PPP session describes the time during which a particular PPP connection instance is maintained in the open state in both the mobile node and PDSN. In general, the PPP session is maintained during periods even where the mobile node is dormant. If the user hands off from one RAN to another RAN but is still connected to the same PDSN, the PPP session remains. On the other hand, if the user changes PDSN coverage area, a new PPP session is created at the new PDSN.

Continuing to refer to FIG. 1, authentication between the mobile node 102 and the WPDN infrastructure may be effectuated using well-known protocols such as the Password Authentication Protocol (PAP) and the Challenge Handshake Authentication Protocol (CHAP), each having its own set of passwords, authentication keys, etc., that are distributed between the mobile node 102 and the infrastructure (i.e., PDSN/AAA) in some manner. In one embodiment, the mobile node 102 may be provided with a single authentication key/password that is used for both PAP as well as CHAP. The network infrastructure, on the other hand, may maintain separate keys or key locations for PAP and CHAP that correspond to the mobile node's PAP/CHAP key.

Based on arrangements between mobile node manufacturers and WPDN service providers, a particular mobile node may be provisioned with a default value as its initial set of PAP/CHAP authentication keys. Further, a mobile node is typically configured to be activated upon initialization in either SIP service mode or MIP service mode, and when initialized in MIP service mode, the mobile node includes logic for initiating a key update procedure for updating its cryptographic keys. A Dynamic MIP Key Update (DMU) procedure, a mechanism for distributing and updating MIP keys, is accordingly executed between the mobile node and the Home AAA/RADIUS server via the PDSN acting as the MIP Foreign Agent.

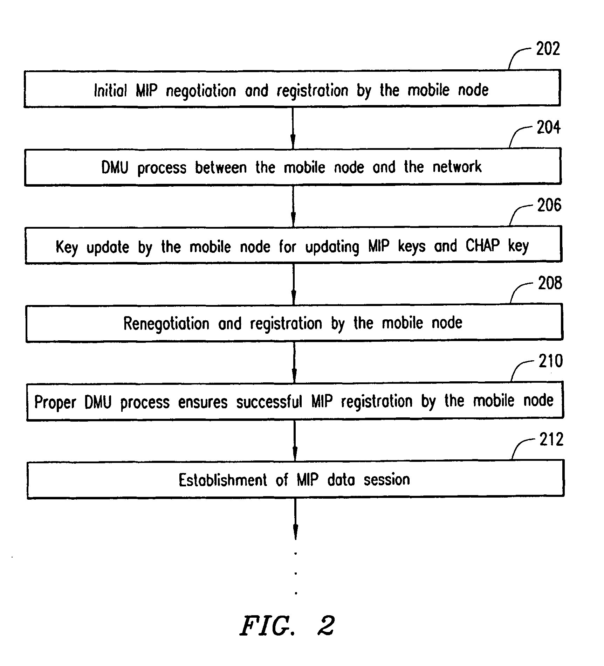

FIG. 2 depicts a flowchart of a key update process in the WPDN embodiment depicted in FIG. 1 for purposes of the present patent disclosure. Upon being activated initially, the mobile node 102 is configured to execute MIP negotiation and registration with the network infrastructure (block 202). A DMU process then takes place between the mobile node 102 and the network in accordance with well-known procedures that involve encrypted key distribution and mutual authentication (block 204). Additional details regarding the DMU mechanism may be found in the Internet Draft draft-carroll-dynmobileip-cdma-05.txt (expiration date: September 2005) by Carroll et al. (March 2005), titled: Verizon Wireless Dynamic Mobile IP Key Update for cdma2000® Networks*,* which is incorporated by reference herein. During the key update process, the mobile node 102 updates its MIP and CHAP keys from the default values with which it was initially provisioned. Since the mobile node typically maintains one location to store SIP authentication key, this effectively updates the PAP key on the mobile node as well. Further, pursuant to the DMU process, the network also updates its MIP/CHAP keys, but not the PAP key (block 206). Thereafter, the mobile node 102 renegotiates registration with the network using its updated authentication keys (block 208). If the DMU process has been properly executed, the mobile node 102 successfully registers with the network (block 210) since the MIP cryptographic keys at the mobile node and the network have been correspondingly updated. Subsequently, the mobile node 102 proceeds with establishment a MIP packet data session (block 212) which may be carried on until termination.

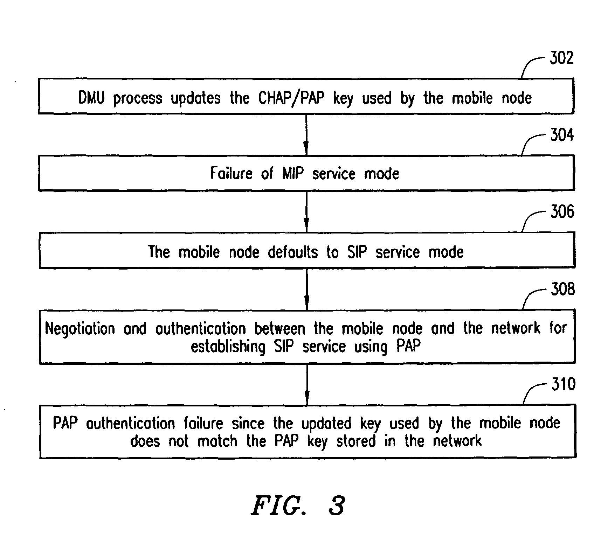

As alluded to in the Background section of the present patent disclosure, when a mobile node updates its keys upon initial registration in MIP service mode, it may become susceptible to registration/authentication failure if the mobile node is rendered in SIP service mode for any reason (e.g., due to a failure encountered while in MIP service mode). FIG. 3 depicts a flowchart of an exemplary unsuccessful authentication procedure after a key update process such as the process set forth above in reference to FIG. 2. As described previously, the DMU process updates the CHAP/PAP key used by the mobile node 102 for authentication (block 302). Upon encountering a failure while the mobile node 102 is in MIP service mode (block 304) (e.g., a failure resulting from the outage of a WPDN node such as the PDSN/FA, Home Agent, and the like), the mobile node 102 is rendered or placed in SIP service mode (i.e., the mobile node defaults to SIP) (block 306). Thereafter, the mobile node 102 attempts negotiation and authentication with the network infrastructure for establishing SIP service using PAP at the request of the PDSN (block 308). However, authentication via PAP will be unsuccessful because the mobile node 102 has updated its common CHAP/PAP key during the key update process while the network continues to use the non-updated PAP key for authentication in SIP (block 310). In other words, due to the mismatch in the PAP keys stored in the mobile node 102 and the network, an authentication conflict arises when the mobile node 102 attempts to reestablish a packet data session in SIP mode.

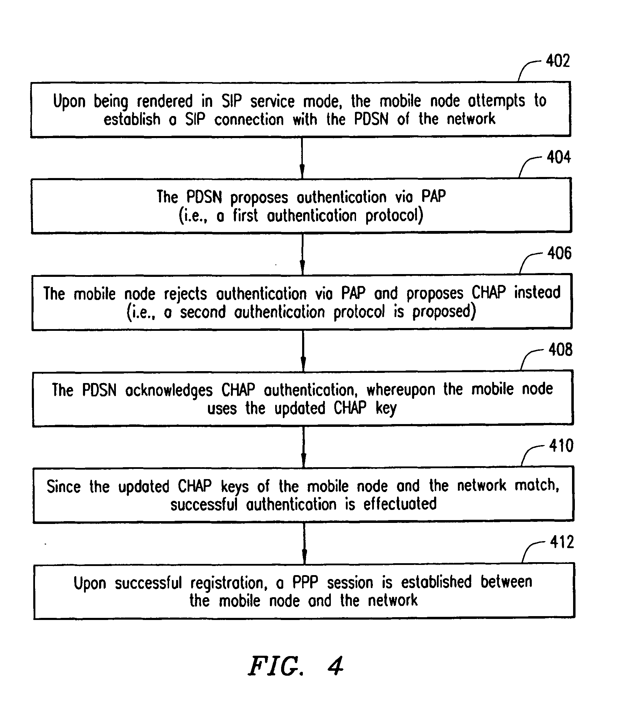

FIG. 4 depicts a flowchart of a method for resolving authentication of a mobile node while establishing a SIP connection in accordance with an embodiment of the present patent disclosure. As set forth above, the mobile node 102 attempts to establish a SIP connection with PDSN 114 of the network upon being rendered in SIP service mode (block 402). The PDSN proposes authentication via a first authentication protocol, i.e., PAP (block 404). In accordance with the teachings herein, the mobile node 102 is provided with logic for rejecting authentication via PAP and for counter-proposing a second authentication protocol, i.e., CHAP, in lieu thereof (block 406). Responsive thereto, the PDSN acknowledges CHAP authentication, whereupon the mobile node 102 uses the updated CHAP key for effectuating an authentication procedure in accordance with the second authentication protocol (block 408). Since the updated CHAP keys of the mobile node 102 and the network infrastructure match, successful authentication is effectuated (block 410). Upon successful registration, a PPP session is established between the mobile node 102 and the network, which continues until termination (block 412).

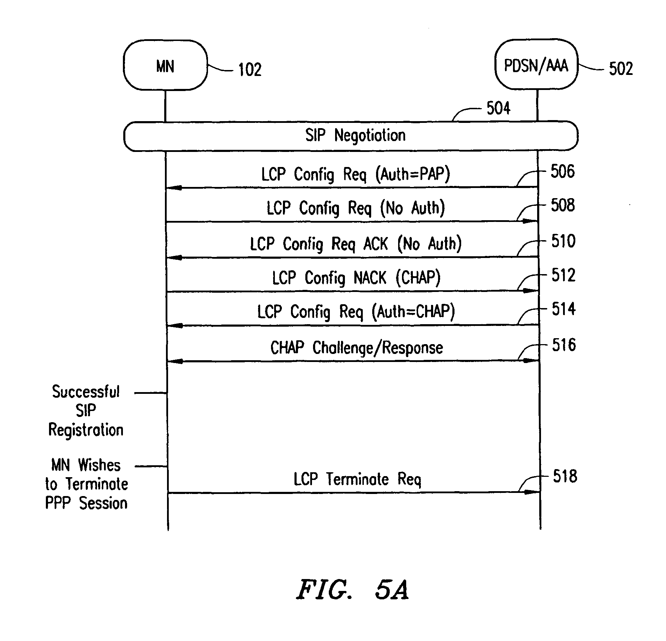

FIG. 5A depicts a message flow diagram for effectuating an embodiment of the authentication resolution procedure depicted in FIG. 4, wherein reference numeral 502 collectively refers to a generalized WPDN infrastructure element including the PDSN and RADIUS-based AAA server functionalities described in detail hereinabove. As SIP negotiation 504 takes place between the mobile node (MN) 102 and the network infrastructure 502, the PDSN transmits a Link Control Protocol (LCP) Configure-Request message 506 which proposes PAP for authentication. In response, MN 102 generates an LCP Configure-Request (without authentication option) message 508 to the PDSN. An LCP Configure-ACK (without authentication option) message 510 is generated in response from the node 502 to MN 102. Thereafter, MN 102 transmits a negative acknowledgment message (LCP Configuration NACK) 512 back to the PDSN, which includes an indication the PAP is not acceptable, but CHAP is. That is, MN 102 generates a counter-proposal that proposes CHAP instead of PAP for authentication. In response, the PDSN transmits a reply message (LCP Configure-Request with CHAP authentication) 516, whereupon a CHAP authentication procedure (i.e., challenge/response procedure) 516 is effectuated, which is described hereinbelow. Thereafter, MN 102 successfully registers with the network in SIP mode. An LCP Terminate-Request message 518 may be generated when MN 102 wishes to terminate the PPP session in SIP mode.

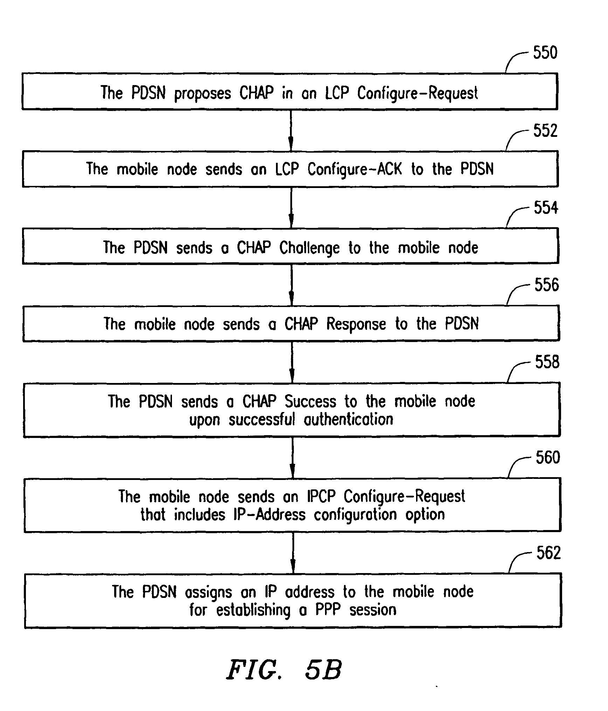

FIG. 5B depicts a flowchart of an exemplary CHAP procedure which may be used at least partially in an embodiment of the present patent disclosure. In general, when the PDSN proposes CHAP in an LCP Configure-Request message (block 550), the mobile node sends an LCP Configure-ACK response to the PDSN (block 552). Subsequently, the PDSN sends a CHAP Challenge to the mobile node (block 554). A CHAP Response is then transmitted back by the mobile node to the PDSN, which is generated based on the CHAP authentication key (updated or otherwise) stored in the mobile node (block 556). The Response is validated by the network using the network's CHAP authentication key, whereupon the PDSN sends a CHAP Success message to the mobile node indicating successful authentication (block 558). Thereafter, the mobile node sends an IPCP Configure-Request message to the network that includes an IP-Address configuration option (block 560). Responsive thereto, the PDSN assigns an IP address to the mobile node for establishing a PPP session (block 562).

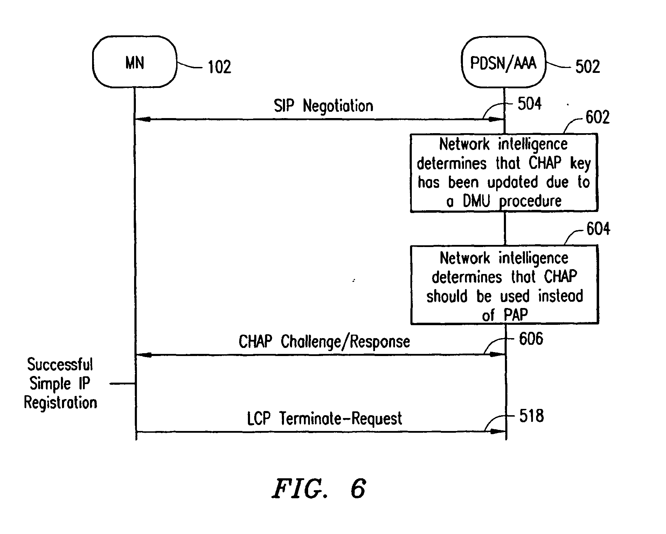

FIG. 6 depicts a message flow diagram for effectuating another embodiment of a method for resolving authentication of a mobile node while establishing a SIP connection in accordance with the teachings of the present patent disclosure. In this embodiment, the network infrastructure element 502 is provided with the intelligence/logic for determining that a key update process has updated the CHAP authentication keys for a particular mobile node. Accordingly, when a SIP negotiation process 504 is attempted between MN 102 and PDSN/AAA 502, the network logic structure 602 determines that the CHAP key set associated with MN 102 has been updated due to a DMU procedure. Another logic structure 604 associated with PDSN/AAA 502 is operable to determine that CHAP should be proposed instead of PAP for authenticating MN 102 in SIP service mode. Responsive to the determinations by logic 602, 604, the PDSN and MN 102 engage in a CHAP Challenge/Response process 606 as set forth above. Upon successful authentication, MN 102 registers with the network infrastructure in SIP mode and proceeds to establish a PPP data session. Thereafter, the session may be terminated by MN 102 by transmitting an LCP Terminate-Request message 518 as described previously.

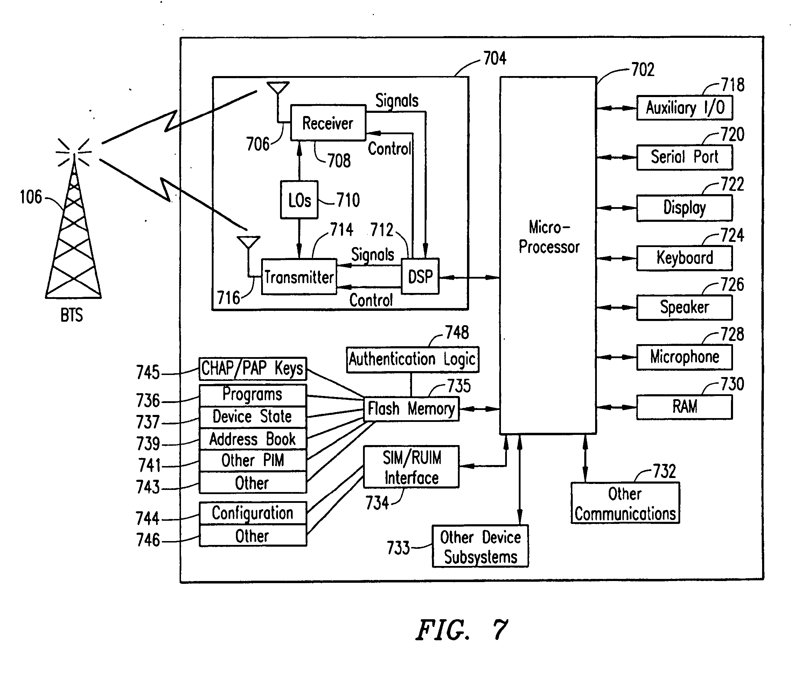

FIG. 7 depicts a block diagram of an embodiment of a communications device operable as a mobile node for purposes of the present patent disclosure. It will be recognized by those skilled in the art upon reference hereto that although an embodiment of MN 102 may comprise an arrangement similar to one shown in FIG. 7, there can be a number of variations and modifications, in hardware, software or firmware, with respect to the various modules depicted. Accordingly, the arrangement of FIG. 7 should be taken as illustrative rather than limiting with respect to the embodiments of the present patent disclosure. A microprocessor 702 providing for the overall control of an embodiment of MN 116 is operably coupled to a communication subsystem 704 which includes a receiver 708 and transmitter 714 as well as associated components such as one or more local oscillator (LO) modules 710 and a processing module such as a digital signal processor (DSP) 712. As will be apparent to those skilled in the field of communications, the particular design of the communication module 704 may be dependent upon the communications network with which the mobile device is intended to operate (e.g., CDMA2000 network). Regardless of the particular design, however, signals received by antenna 706 through BTS 106 are provided to receiver 708, which may perform such common receiver functions as signal amplification, frequency down conversion, filtering, channel selection, analog-to-digital (A/D) conversion, and the like. Similarly, signals to be transmitted are processed, including modulation and encoding, for example, by DSP 712, and provided to transmitter 714 for digital-to-analog (D/A) conversion, frequency up conversion, filtering, amplification and transmission over the air-radio interface via antenna 716.

Microprocessor 702 also interfaces with further device subsystems such as auxiliary input/output (I/O) 718, serial port 720, display 722, keyboard/keypad 724, speaker 726, microphone 728, random access memory (RAM) 730, a short-range communications subsystem 732, and any other device subsystems generally labeled as reference numeral 733. To control access, a Subscriber Identity Module (SIM) or Removable user Identity Module (RUIM) interface 734 is also provided in communication with the microprocessor 702. In one implementation, SIM/RUIM interface 734 is operable with a SIM/RUIM card having a number of key configurations 744 and other information 746 such as identification and subscriber-related data.

Operating system software and applicable transport stack software may be embodied in a persistent storage module (i.e., non-volatile storage) such as Flash memory 735. In one implementation, Flash memory 735 may be segregated into different areas, e.g., storage area for computer programs 736 as well as data storage regions such as device state 737, address book 739, other personal information manager (PIM) data 741, and other data storage areas generally labeled as reference numeral 743. Additionally, an authentication logic module 748 is provided for effectuating CHAP/PAP authentication resolution according to the teachings set forth hereinabove. It is therefore envisaged that at least following logic structures are implemented within the arrangement of FIG. 7: logic for negotiating a SIP connection with a PDSN of a wireless packet data network, the logic operating responsive to the mobile node being rendered in a SIP service mode; logic for counter-proposing a second authentication protocol (e.g., CHAP) for use after rejecting a first authentication protocol (e.g., PAP) proposed by the PDSN; and logic for effectuating an authentication procedure in accordance with the second authentication protocol once the second authentication protocol is acknowledged by the PDSN, wherein the authentication procedure uses a set of authentication keys, a first one provided with the mobile node (e.g., CHAP/PAP key 745) and a second one provided with the PDSN, that have been updated in a key update process. Additionally, there is logic provided with MN 102 for effectuating appropriate DMU process when MN 102 is in MIP service mode.

By way of a further embodiment, the CHAP/PAP keys 745 may be segregated in the mobile node such that when MN 102 executes a DMU process, only the CHAP authentication key is updated and not the PAP authentication key. In such an arrangement, when MN 102 defaults to SIP service mode upon encountering a failure in MIP service mode, the PAP procedure proposed by the PDSN will operate normally without any authentication failure since the PAP keys have not been updated.

It is believed that the operation and construction of the embodiments of the present patent application will be apparent from the Detailed Description set forth above. While the exemplary embodiments shown and described may have been characterized as being preferred, it should be readily understood that various changes and modifications could be made therein without departing from the scope of the present invention as set forth in the following claims.

## Claims

1. A method for resolving authentication of a mobile node (102) disposed in a wireless packet data network (100), said mobile node initially configured to operate in a Mobile Internet Protocol service mode, **characterized by** the method comprising:
upon being rendered in a Simple Internet Protocol service mode due to a failure in said Mobile Internet Protocol service mode, attempting by said mobile node (102) to establish a Simple Internet Protocol connection with a packet data serving node (114) of said wireless packet data network (100);
responsive to a first authentication protocol proposed (404) by a packet data serving node (114), counter-proposing (406) by said mobile node (102) of a second authentication protocol for use; and
upon acknowledging (408) said second authentication protocol by said packet serving node (114), effectuating an authentication procedure (410) in accordance with said second authentication protocol, wherein said authentication procedure (410) uses a set of authentication keys, a first one provided with said mobile node (102) and a second one provided with said PDSN (114), that have been updated in a key update process (302) during initial Mobile Internet Protocol registration.

2. The method for resolving authentication of a mobile node (102) disposed in a wireless packet data network (100) as recited in claim 1, wherein said first authentication protocol comprises Password Authentication Protocol (506) and said second authentication protocol comprises Challenge Handshake Authentication Protocol (512).

3. The method for resolving authentication of a mobile node (102) disposed in a wireless packet data network (100) as recited in claim 1, wherein said mobile node (102) effectuates said key update process (302) during initial Mobile IP registration.

4. A mobile node (102) operable in a wireless packet data network (100), **characterized by**:
a logic block for activating (202) said mobile node (102) in a Mobile Internet Protocol Service mode upon initialization;
logic for placing said mobile node (102) in Simple Internet Protocol service mode upon encountering a failure in said Mobile Internet Protocol service mode (304, 306);
a logic block (748) for counter-proposing (406) a second authentication protocol for use after rejecting a first authentication protocol proposed (404) by a packet data serving node (114) of said wireless packet data network (100) when said mobile node (102) attempts to negotiate (402) a Simple Internet Protocol connection therewith;
a logic block (748) for effectuating an authentication procedure (410) in accordance with said second authentication protocol once said second authentication protocol is acknowledged (408) by said packet data serving node (114), wherein said authentication procedure (410) uses a set of authentication keys, a first one (745) provided with said mobile node (102) and a second one provided with said packet data serving node (114), that have been updated in a key update process (302), and
a logic block for effectuating said key update process (302) during initial Mobile Internet Protocol registration.

5. The mobile node (102) operable in a wireless packet data network (100) as recited in claim 4, wherein said first authentication protocol comprises Password Authentication Protocol (506) and said second authentication protocol comprises Challenge Handshake Authentication Protocol (512).

6. A packet data serving node (502) operable in a wireless packet data network (100), **characterized by**:
means for determining (602) that a mobile node (102) which is configured to be activated in Mobile Internet Protocol service mode upon initialization, and which is arranged to be placed in Service Internet Protocol service mode upon encountering a failure in said Mobile Internet Protocol Service mode, has updated a set of authenticating keys used for authenticating mobile node (102), said set of authentication keys including a first one provided with said mobile node (102) and a second one provided with said packet data serving node (502); and
means for effectuating (604) an authentication procedure in accordance with a particular authentication protocol (606) when said mobile node (102) attempts to negotiate a Simple Internet Protocol connection (504) with said packet data serving node (502) upon being rendered in the Simple Internet Protocol service mode, wherein said authentication procedure uses said set of authentication keys that have been updated in a key update process (302) during initial Internet Protocol registration.

7. The packet data serving node (502) operable in a wireless packet data network (100) as recited in claim 6, wherein said particular authentication protocol (606) comprises Challenge Handshake Authentication Protocol.

8. The packet data serving node (502) operable in a wireless packet data network (100) as recited in claim 6, including logic for effectuating (604) an authentication procedure in accordance with said particular authentication protocol includes logic for generating a challenge to said mobile node (102).

9. The packet data serving node (502) operable in a wireless packet data network (100) as recited in claim 8, wherein said logic for effectuating (604) an authentication procedure in accordance with said particular authentication protocol further includes logic for validating a response transmitted by said mobile node (102), said validating being based on said second key associated with said packet data serving node PDSN (502) that has been updated in said key update process (302).

## Patentansprüche

1. Verfahren zum Auflösen einer Authentifizierung eines mobilen Knotens (102), der in einem drahtlosen Paketdaten-Netzwerk (100) angeordnet ist, wobei der mobile Knoten anfänglich konfiguriert ist, um in einem Mobilen Internet Protokoll-Dienstmodus zu wirken, **gekennzeichnet durch** das Verfahren, umfassend:
Nach Übergeben in einen Einfachen Internet Protokoll-Dienstmodus aufgrund eines Fehlschlagens in dem Mobilen Internet Protokoll-Dienstmodus, Versuchen **durch** den mobilen Knoten (102), eine Einfache Internet Protokoll-Verbindung mit einem Paketdaten-Dienstknoten (114) des drahtlosen Paketdaten-Netzwerkes (100) aufzubauen,
in Antwort auf ein erstes Authentifizierungsprotokoll, das durch einen Paketdaten-Dienstknoten (114) vorgeschlagen ist (404), Gegenvorschlagen (406) eines zweiten Authentifizierungsprotokolls zur Verwendung **durch** den mobilen Knoten (102), und
nach Bestätigen (408) des zweiten Authentifizierungsprotokolls **durch** den Paket-Dienstknoten (114), Durchführen eines Authentifizierungsverfahrens (410) in Übereinstimmung mit dem zweiten Authentifizierungsprotokoll, wobei das Authentifizierungsverfahren (410) einen Satz von Authentifizierungsschlüsseln verwendet, wobei ein erster mit dem mobilen Knoten (102) vorgesehen ist und ein zweiter mit dem PSDN (114) vorgesehen ist, die in einem Schlüsselaktualisierungsverfahren (302) während einer anfänglichen Mobilen Internet Protokoll-Registrierung aktualisiert worden sind.

2. Verfahren zum Auflösen einer Authentifizierung eines mobilen Knotens (102), der in einem drahtlosen Paketdaten-Netzwerk (100) angeordnet ist, nach Anspruch 1, wobei das erste Authentifizierungsprotokoll ein Passwort-Authentifizierungsprotokoll (506) umfasst und das zweite Authentifizierungsprotokoll ein Challenge Handshake-Authentifizierungsprotokoll (512) umfasst.

3. Verfahren zum Auflösen einer Authentifizierung eines mobilen Knotens (102), der in einem drahtlosen Paketdaten-Netzwerk (100) angeordnet ist, nach Anspruch 1, wobei der mobile Knoten (102) das Schlüsselaktualisierungsverfahren während einer anfänglichen Mobilen IP-Registrierung durchführt.

4. Mobiler Knoten (102), der in einem drahtlosen Paketdaten-Netzwerk (100) wirksam ist, **gekennzeichnet durch**:
Einen Logikblock zum Aktivieren (202) des mobilen Knotens (102) in einem Mobilen Internet Protokoll-Dienstmodus nach einer Initialisierung,
eine Logik zum Anordnen des mobilen Knotens (102) in einem Einfachen Internet Protokoll-Dienstmodus nach Auftreten eines Fehlschlagens in dem Mobilen Internet Protokoll-Dienstmodus (304, 306),
einen Logikblock (748) zum Gegenvorschlagen (406) eines zweiten Authentifizierungsprotokolls zur Verwendung nach einem Zurückweisen eines ersten Authentifizierungsprotokolls, das **durch** einen Paketdaten-Dienstknoten (114) des drahtlosen Paketdaten-Netzwerkes (100) vorgeschlagen ist (404), wenn der mobile Knoten (102) versucht, eine Einfache Internet Protokoll-Verbindung damit herzustellen (402),
einen Logikblock 448) zum Durchführen eines Authentifizierungsverfahrens (410) in Übereinstimmung mit dem zweiten Authentifizierungsprotokoll, nachdem das zweite Authentifizierungsprotokoll **durch** den Paketdaten-Dienstknoten (114) bestätigt ist (408), wobei das Authentzfizierungsverfahren (410) einen Satz von Authentifizierungsschlüsseln verwendet, wobei ein erster (745) mit dem mobilen Knoten (102) vorgesehen ist und ein zweiter mit dem Paketdaten-Dienstknoten (114) vorgesehen ist, die in einem Schlüsselaktualisierungsverfahren (302) aktualisiert worden sind, und
einen Logikblock zum Durchführen des Schlüsselaktualisierungsverfahrens (302) während einer anfänglichen Mobilen Internet Protokoll-Registrierung.

5. Mobiler Knoten (102), der in einem drahtlosen Paketdaten-Netzwerk (100) wirksam ist, nach Anspruch 4, wobei das erste Authentifizierungsprotokoll ein Passwort-Authentifizierungsprotokoll (506) umfasst und das zweite Authentifizierungsprotokoll ein Challenge Handshake-Authentifizierungsprotokoll (512) umfasst.

6. Paketdaten-Dienstknoten (502), der in einem drahtlosen Paketdaten-Netzwerk (100) wirksam ist, **gekennzeichnet durch**:
Eine Einrichtung zum Bestimmen (602), dass ein mobiler Knoten (102), welcher konfiguriert ist, um in einem Mobilen Internet Protokoll-Dienstmodus nach einer Initialisierung aktiviert zu werden, und welcher ausgebildet ist, in einem Dienst Internet Protokoll-Dienstmodus nach Auftreten eines Fehlschlagens in dem Mobilen Internet Protokoll-Dienstmodus angeordnet zu werden, einen Satz von Authentifizierungsschlüsseln, die zum Authentifizieren eines mobilen Knotens (102) verwendet sind, aktualisiert hat, wobei der Satz von Authentifizierungsschlüsseln einen ersten, der mit dem mobilen Knoten (102) vorgesehen ist, und einen zweiten, der mit dem Paketdaten-Dienstknoten (502) vorgesehen ist, umfasst, und
eine Einrichtung zum Durchführen (604) eines Authentifizierungsverfahrens in Übereinstimmung mit einem bestimmten Authentifizierungsprotokoll (606), wenn der mobile Knoten (102) versucht, eine Einfache Internet Protokoll-Verbindung (504) mit dem Paketdaten-Dienstknoten (502) nach Übergabe in den Einfachen Internet Protokoll-Dienstmodus herzustellen, wobei das Authentifizierungsverfahren einen Satz von Authentifizierungsschlüsseln verwendet, die in einem Schlüsselaktualisierungsverfahren (302) während einer anfänglichen Mobilen Internet Protokoll-Registrierung aktualisiert worden sind.

7. Paketdaten-Dienstknoten (502), der in einem drahtlosen Paketdaten-Netzwerk (100) wirksam ist, nach Anspruch 6, wobei das bestimmte Authentifizierungsprotokoll (606) ein Challenge Handshake-Authentifizierungsprotokoll (512) umfasst.

8. Paketdaten-Dienstknoten (502), der in einem drahtlosen Paketdaten-Netzwerk (100) wirksam ist, nach Anspruch 6, umfassend eine Logik zum Durchführen (604) eines Authentifizierungsverfahrens in Übereinstimmung mit dem bestimmten Authentifizierungsprotokoll, die eine Logik zum Erzeugen einer Herausforderung an den mobilen Knoten (102) umfasst.

9. Paketdaten-Dienstknoten (502), der in einem drahtlosen Paketdaten-Netzwerk (100) wirksam ist, nach Anspruch 8, wobei die Logik zum Durchführen (604) eines Authentifizierungsverfahrens in Übereinstimmung mit dem bestimmten Authentifizierungsprotokoll weiterhin eine Logik zum überprüfen einer Gültigkeit einer Antwort, die von dem mobilen Knoten (102) übertragen ist, umfasst, wobei das Überprüfen der Gültigkeit auf einem zweiten Schlüssel, welcher dem Paketdaten-Dienstknoten PSDN (502) zugeordnet ist, basiert, der in dem Schlüsselaktualisierungsverfahren (302) aktualisiert worden ist.

## Revendications

1. Procédé de résolution d'authentification d'un noeud mobile (102) disposé dans un réseau sans fil (100) de données par paquets, ledit noeud mobile étant initialement configuré pour opérer en mode de service sous protocole d'Internet mobile, **caractérisé en ce que** le procédé comprend :
après avoir été mis en mode service sous protocole d'Internet simple en raison d'une défaillance dudit mode de service sous protocole d'Internet mobile, une tentative par ledit noeud mobile (102) d'établir une connexion sous protocole d'Internet simple avec un noeud (114) de service de données par paquets dudit réseau sans fil (100) de données par paquets ;
en réponse à un premier protocole d'authentification proposé (404) par un noeud (114) de service de données par paquets, la contre-proposition (406) par ledit noeud mobile (102) d'un second protocole d'authentification pour utilisation ; et
après accusé de réception (408) dudit second protocole d'authentification par ledit noeud (114) de service de paquets, l'exécution d'une procédure (410) d'authentification selon ledit second protocole d'authentification, dans lequel ladite procédure (410) d'authentification utilise un ensemble de clés d'authentification, une première étant prévue avec ledit noeud mobile (102) et une seconde étant prévue avec ledit noeud (114) de service de données par paquets (PDSN pour Packet Data Serving Node), qui ont été mises à jour dans un processus (302) de mise à jour de clés pendant un enregistrement initial sous protocole d'Internet mobile.

2. Procédé de résolution d'authentification d'un noeud mobile (102) disposé dans un réseau sans fil (100) de données par paquets selon la revendication 1, dans lequel ledit premier protocole d'authentification comprend un protocole (506) d'authentification par mot de passe et ledit second protocole d'authentification comprend un protocole (512) d'authentification par échange de nombre aléatoire.

3. Procédé de résolution d'authentification d'un noeud mobile (102) disposé dans un réseau sans fil (100) de données par paquets selon la revendication 1, dans lequel ledit noeud mobile (102) exécute ledit processus (302) de mise à jour de clés pendant l'enregistrement initial du protocole d'Internet (IP pour Internet Protocol) mobile.

4. Noeud mobile (102) utilisable dans un réseau sans fil (100) de données par paquets, **caractérisé par** :
un bloc logique destiné à activer (202) ledit noeud mobile (102) dans un mode de service sous protocole d'Internet mobile après initialisation ;
un bloc logique destiné à placer ledit noeud mobile (102) dans un mode de service sous protocole d'Internet simple après avoir rencontré une défaillance dans ledit mode (304, 306) de service sous protocole d'Internet mobile ;
un bloc logique (748) destiné à contre-proposer (406) un second protocole d'authentification pour utilisation après avoir rejeté un premier protocole d'authentification proposé (404) par un noeud (114) de service de données par paquets dudit réseau sans fil (100) de données par paquets lorsque ledit noeud mobile (102) tente de négocier (402) avec celui-ci une connexion sous protocole d'Internet simple ;
un bloc logique (748) destiné à effectuer une procédure (410) d'authentification suivant ledit second protocole d'authentification une fois que ledit noeud (114) de service de données par paquets a accusé réception (408) dudit second protocole d'authentification, dans lequel ladite procédure (410) d'authentification utilise un ensemble de clés d'authentification, une première (745) étant prévue avec ledit noeud mobile (102) et une seconde étant prévue avec ledit noeud (114) de service de données par paquets, qui ont été mises à jour dans un processus (302) de mise à jour de clés ; et
un bloc logique destiné à effectuer ledit processus (302) de mise à jour de clés pendant un enregistrement initial sous protocole d'Internet mobile.

5. Noeud mobile (102) utilisable dans un réseau sans fil (100) de données par paquets selon la revendication 4, dans lequel ledit premier protocole d'authentification comprend un protocole (506) d'authentification par mot de passe et ledit second protocole d'authentification comprend un protocole (512) d'authentification par échange de nombre aléatoire.

6. Noeud (502) de service de données par paquets utilisable dans un réseau sans fil (100) de données par paquets, **caractérisé par** :
un moyen destiné à déterminer (602) qu'un noeud mobile (102), qui est configuré pour être activé en mode de service sous protocole d'Internet mobile après initialisation, et qui est agencé pour être placé en mode de service sous protocole d'Internet de service après avoir rencontré une défaillance dans ledit mode de service sous protocole d'Internet mobile, a mis à jour un ensemble de clés d'authentification utilisé pour authentifier le noeud mobile (102), ledit ensemble de clés d'authentification incluant une première prévue avec ledit noeud mobile (102) et une seconde prévue avec ledit noeud (502) de service de données par paquets ; et
un moyen destiné à effectuer (604) une procédure d'authentification selon un protocole particulier (606) d'authentification lorsque ledit noeud mobile (102) tente de négocier une connexion (504) sous protocole d'Internet simple avec ledit noeud (502) de service de données par paquets après avoir été remis en mode de service sous protocole d'Internet simple, dans lequel ladite procédure d'authentification utilise ledit ensemble de clés d'authentification qui ont été mises à jour dans un processus (302) de mise à jour de clés pendant un enregistrement initial sous protocole d'Internet.

7. Noeud (502) de service de données par paquets utilisable dans un réseau sans fil (100) de données par paquets selon la revendication 6, dans lequel ledit protocole particulier (606) d'authentification comprend un protocole d'authentification par échange de nombre aléatoire.

8. Noeud (502) de service de données par paquets utilisable dans un réseau sans fil (100) de données par paquets selon la revendication 6, incluant un circuit logique destiné à effectuer (604) une procédure d'authentification selon ledit protocole particulier d'authentification qui comprend un circuit logique destiné à engendrer un nombre aléatoire pour ledit noeud mobile (102).

9. Noeud (502) de service de données par paquets utilisable dans un réseau sans fil (100) de données par paquets selon la revendication 8, dans lequel ledit circuit logique destiné à effectuer (604) une procédure d'authentification selon ledit protocole particulier d'authentification comprend en outre un circuit logique destiné à valider une réponse transmise par ledit noeud mobile (102), ladite validation étant basée sur ladite seconde clé associée audit noeud (502) de service de données par paquets PDSN qui a été mise à jour dans ledit processus (302) de mise à jour de clés.
